(19) Europäisches Patentamt
European Patent Office
Office européen des brevets

(11) EP 4 741 055 A1

(12) # EUROPEAN PATENT APPLICATION

(43) Date of publication:
**13.05.2026 Bulletin 2026/20**

(21) Application number: **24212461.8**

(22) Date of filing: **12.11.2024**

(51) International Patent Classification (IPC):
***B01J 29/76*** *(2006.01)* ***B01J 37/30*** *(2006.01)*

(52) Cooperative Patent Classification (CPC):
**B01J 37/30; B01J 29/763**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Johnson Matthey Public Limited Company**
**London EC2V 7AD (GB)**

(72) Inventors:
- **FAIRALL, Charlotte**
  **Royston, SG8 5HE (GB)**
- **HOTCHKISS, Thomas**
  **Royston, SG8 5HE (GB)**

(74) Representative: **Johnson Matthey Public Limited Company**
**Blounts Court Road, Sonning Common**
**Intellectual Property Department**
**Reading RG4 9NH (GB)**

(54) **PRODUCTION OF METAL ION-EXCHANGED MOLECULAR SIEVE**

(57) A method of quantifying a content of an insoluble metal compound in an aqueous suspension comprising an insoluble metal compound and a metal ion-exchanged molecular sieve is disclosed, The method comprises: treating the aqueous suspension of the insoluble metal compound and the metal ion-exchanged molecular sieve with a selective solubilising agent for the insoluble metal compound, thus producing a treated mixture comprising a metal solution comprising a dissolved metal from the insoluble metal compound and undissolved metal ion-exchanged molecular sieve; and quantifying a dissolved metal content of the treated mixture using a suitable analytical technique.

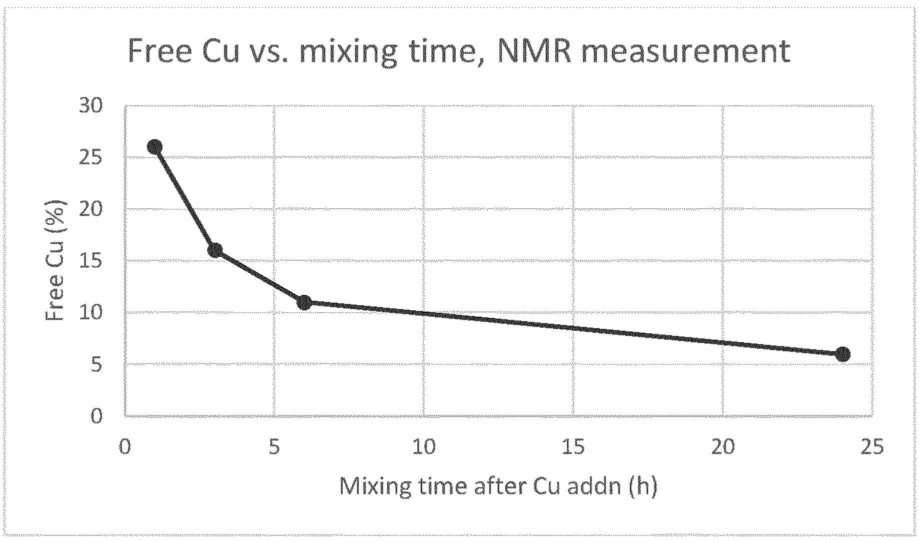


FIG. 1

EP 4 741 055 A1

## Description

### Field of the Invention

This invention relates to the production of a metal ion-exchanged molecular sieve. More specifically, the invention relates to quantifying the content of an insoluble metal compound in a metal ion-exchanged molecular sieve suspension to determine the progress of a metal ion-exchange reaction between the insoluble metal compound and the molecular sieve in the suspension in the context of the manufacture of the metal ion-exchanged molecular sieve.

### Background to the Invention

Various analytical techniques are available to quantify the concentration of dissolved species in solutions, including spectroscopic techniques and gravimetric techniques. The quantification of the concentration or the content of such dissolved species, and particularly of dissolved metal species, finds prominent application in the manufacture of metal ion-exchanged molecular sieve by metal ion-exchange reactions between metal compounds and molecular sieves in a liquid medium, e.g., an aqueous medium. Quantifying the concentration of dissolved species, and particularly of dissolved metal species can help to determine the extent to which such dissolved metal species have been deposited onto or into the molecular sieve.

One approach to the manufacture of metal ion-exchanged molecular sieve, in which such quantification finds application, is for a molecular sieve to be suspended in a liquid medium and for a metal to be deposited onto and/or into the molecular sieve through an ion-exchange reaction in the liquid medium between the molecular sieve and a metal compound. In many cases, the metal compound is soluble in the liquid medium. In such cases, quantifying the progress of the metal ion-exchange reaction may conveniently be performed using one or more of the abovementioned analytical techniques.

However, there are also cases in which the metal compound is insoluble in the liquid medium. In such cases, quantifying the progress of the metal ion-exchange reaction is not possible using the abovementioned analytical techniques, due to the insolubility of the metal compound.

WO2020/227333A1 discloses the manufacture of a selective catalytic reduction catalyst by metal ion-exchange using copper carbonate. WO2020/227333A1 discloses that the efficiency of metal ion-exchange may be determined by ammonia back-exchange and inductively coupled plasma-optical emission spectrometry (ICP-OES). In ammonia back-exchange, ion exchanged metal in the zeolitic material is removed, leaving un-exchanged residual metal in the form of the metal oxide. The amount of residual metal is determined by ICP-OES, and the difference in the metal concentration before and after the ammonia back-exchange is the amount of ion-exchanged metal. The back-exchange required by this approach is complicated and laborious.

### Summary of the Invention

According to a first aspect of the invention, there is provided a method of quantifying a content of an insoluble metal compound in an aqueous suspension comprising an insoluble metal compound and a metal ion-exchanged molecular sieve, the method comprising the steps of:

treating the aqueous suspension of the insoluble metal compound and the metal ion-exchanged molecular sieve with a selective solubilising agent for the insoluble metal compound, thus producing a treated mixture comprising a metal solution comprising a dissolved metal from the insoluble metal compound and undissolved metal ion-exchanged molecular sieve; and
quantifying a dissolved metal content of the treated mixture using a suitable analytical technique.

According to a second aspect of the invention, there is provided a method of producing a metal ion-exchanged molecular sieve, the method comprising:

forming an aqueous suspension of a molecular sieve and an insoluble metal compound such that the molecular sieve and the insoluble metal compound undergo ion-exchange in the aqueous suspension, thus forming a metal ion-exchanged molecular sieve; and
after expiry of a predetermined time period, or at predetermined time intervals, or at random time intervals, quantifying a dissolved metal content of the aqueous suspension in accordance with the method of the first aspect of the invention.

## Detailed Description of the Invention

The inventors of the present invention have found that the application of known analytical techniques may conveniently be enabled in quantifying the content of an insoluble metal compound that is present with a suspended metal ion-exchanged molecular sieve in an aqueous suspension, by treating the suspension with a selective solubilising agent for the insoluble metal compound. The selective solubilising agent added to the aqueous suspension comprising a metal-ion-exchanged molecular sieve and the insoluble metal compound reacts with the insoluble metal compound present in the suspension to form a soluble metal compound or compounds, which allows for conventional analytical techniques to be applied to quantify the dissolved metal content in the suspension while the selective solubilising agent does not dissolve the metal ions in the metal-ion-exchanged molecular sieve.

According to a first aspect of the invention, there is provided a method of quantifying a content of an insoluble metal compound in an aqueous suspension of an insoluble metal compound and a metal ion-exchanged molecular sieve, the method comprising the steps of:

treating the aqueous suspension of the insoluble metal compound and the metal ion-exchanged molecular sieve with a selective solubilising agent for the insoluble metal compound, thus producing a treated mixture comprising dissolved metal from the insoluble metal compound and undissolved metal ion-exchanged molecular sieve; and

quantifying a dissolved metal content of the treated mixture using a suitable analytical technique.

As is used herein "molecular sieve" is understood to mean a material with pores of uniform size. The molecular sieve may be selected from a zeolitic molecular sieve, a non-zeolitic molecular sieve, and a mixture thereof. Preferably, the molecular sieve is a zeolitic molecular sieve.

A zeolitic molecular sieve is a microporous aluminosilicate having any one of the framework structures listed in the Database of Zeolite Structures published by the International Zeolite Association (IZA). The framework structures include, but are not limited to those of the CHA, BEA, FAU, LTA, MFI, and MOR types. Non-limiting examples of zeolites having these structures include chabazite, faujasite, zeolite Y, ultrastable zeolite Y, beta zeolite, mordenite, silicalite, zeolite X, and ZSM-5. Aluminosilicate zeolites can have a silica-to-alumina molar ratio (SAR, defined as $SiO_2/Al_2O_3$) from 5 to 200, from 10 to 180, or from about 20 to 150. In another embodiment, the SAR may be from 12 to 30.

As used herein, the term "non-zeolitic molecular sieve" refers to corner sharing tetrahedral frameworks where at least a portion of the tetrahedral sites are occupied by an element other than silicon or aluminum. Specific non-limiting examples of non-zeolitic molecular sieves include silicoaluminophosphates such as SAPO-34, SAPO-37 and SAPO-44. The silicoaluminophosphates can have framework structures that contain framework elements that are found in zeolites, such as BEA, CHA, FAU, LTA, MFI, MOR and other types described below.

The molecular sieve may comprise a small-pore, a medium-pore, or a large-pore molecular sieve, or combinations thereof.

In some embodiments of the invention, the molecular sieve may comprise a small-pore molecular sieve selected from the group consisting of aluminosilicate molecular sieves, metal-substituted aluminosilicate molecular sieves, aluminophosphate (AlPO) molecular sieves, metal-substituted aluminophosphate (MeAlPO) molecular sieves, silico-aluminophosphate (SAPO) molecular sieves, and metal substituted silico-aluminophosphate (MeAPSO) molecular sieves, and mixtures thereof.

In some embodiments of the invention, the molecular sieve may comprise a small-pore molecular sieve selected from the group of Framework Types consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, LTA, MER, MON, NSI, OWE, PAU, PHI, RHO, RTH, SAT, SAV, SIV, THO, TSC, UEI, UFI, VNI, YUG, and ZON, and mixtures and/or intergrowths thereof.

The small pore molecular sieve may be selected from the group of Framework Types consisting of AEI, AFX, CHA, DDR, ERI, ITE, KFI, LTA, LEV, and SFW.

In some embodiments of the invention, the molecular sieve may comprise a medium-pore molecular sieve selected from the group of Framework Types consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PUN, RRO, RSN, SFF, SFG, STF, STI, STT, STW, -SVR, SZR, TER, TON, TUN, UOS, VSV, WEI, and WEN, and mixtures and/or intergrowths thereof.

The medium pore molecular sieve may be selected from the group of Framework Types consisting of FER, MFI, and STT.

In some embodiments of the invention, the molecular sieve may comprise a large-pore molecular sieve selected from the group of Framework Types consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, and mixtures and/or intergrowths thereof.

The large pore molecular sieve can be selected from the group of Framework Types consisting of BEA, MOR and OFF.

The metal exchanged molecular sieve can have at least one metal deposited onto extra-framework sites on the external surface or within the channels, cavities, or cages thereof. Metals may be in one of several forms, including, but not limited to isolated cations, mononuclear or polynuclear oxycations, and the like.

The metal ion-exchanged molecular sieve may be a product of ion-exchange between the insoluble metal compound and a starting molecular sieve in the aqueous suspension. The "starting molecular sieve" may be metal-free, or it may contain a metal that is the same or different from the metal in the insoluble metal compound. For example, the starting molecular sieve may contain cations, for example, $H^+$, $NH_4^+$, alkali metal cations, alkaline earth metal cations, or other metal cations.

In some embodiments of the invention, the metal ion-exchanged molecular sieve is a reaction product between the insoluble metal compound and a metal-free molecular sieve.

The metal of the insoluble metal compound may be a transition metal or a rare earth metal. For example, the insoluble metal compound may be compound of Cu, Mn, Fe, Co, or Ni. In some embodiments of the invention, the insoluble metal compound is compound of Cu, Mn, Fe, and mixtures thereof. In some embodiment of the invention, the metal is Cu.

The insoluble metal compound may be an insoluble metal salt, hydroxide, or oxide. For example, the insoluble metal compound can be a metal carbonate, metal hydroxide, metal sulphate, metal phosphate, and mixtures thereof. For example, when the metal is copper, the insoluble metal compound can be copper carbonate ($CuCO_3$), copper oxide (CuO), or alkaline copper carbonate ($CuCO_3 \cdot Cu(OH)_2$).

The insoluble metal compound may have a solubility of less than 0.1 g per 100 g water at 25°C. Preferably, the insoluble metal compound has a solubility of less than 0.01 g per 100 g water at 25°C

The metal ion-exchanged molecular sieve can in the context of the present invention contain in the range of from about 0.1 wt% to about 10 wt% metal located on extra framework sites on the external surface or within the channels, cavities, or cages thereof. In this regard it would be appreciated that, at the beginning of the ion-exchange reaction, the molecular sieve would in some cases not comprise any metal. There may however also be cases in which the starting molecular sieve already contains a metal, which may be the same metal as or a different metal grom the metal of the insoluble metal compound. For example, the starting molecular sieve may be a zeolite containing certain amount of copper, iron, or manganese ions.

When the metal of the insoluble metal compound is copper, the metal exchanged molecular sieve may be a small pore molecular sieve having from 0.1 to 20 wt%, 1 wt. % to 6 wt%, or from 2 wt% to 5 wt% copper relative to the total weight of the metal exchanged molecular sieve.

When the metal is iron, the metal exchanged molecular sieve may be a small pore molecular sieve having from 0.1 to 20 wt%, 1 wt% to 6 wt%, or from 2 wt% to 5 wt% iron relative to the total weight of the metal exchanged molecular sieve.

In the abovementioned ranges for copper and iron, it would be appreciated that, at start-up of the ion-exchange reaction, the molecular sieve may not comprise any metal.

The selective solubilising agent is preferably a selective solubilising agent only for the insoluble metal compound and not for metal that has been deposited onto the metal ion-exchanged molecular sieve.

The selective solubilising agent may be a chelating agent. Preferably, the selective solubilising agent is a polycarboxylic acid or an aminopolycarboxylic acid or a salt thereof. More preferably, the selective solubilising agent is ethylenediaminetetraacetic acid (EDTA) or a salt thereof.

The aqueous suspension before treatment thereof with the selective solubilising agent may have a pH in a region of from 2 to 6.

Treating the aqueous suspension with the selective solubilising agent may include adjusting the pH of the aqueous suspension. For example, the pH may be adjusted to greater than 7. Preferably, the pH is adjusted to greater than 12.

Adjusting the pH of the aqueous suspension may include treating the aqueous suspension with a base. The base may be selected from an inorganic base, an organic base, or a mixture thereof. Preferably, the base is selected from alkali metal hydroxides, alkaline earth metal hydroxides, and ammonium hydroxides. More preferably, the base is selected from sodium hydroxide (NaOH), potassium hydroxide (KOH), calcium hydroxide ($Ca(OH)_2$), ammonium hydroxide, tetramethylammonium hydroxide, tetraethylammonium hydroxide, and mixtures thereof.

In some embodiments of the invention, the aqueous suspension is treated with the base simultaneously with the treatment of the aqueous suspension with the selective solubilising agent. In such an embodiment, the base may either be provided in an admixture with the selective solubilising agent, or it may be added separately of the selective solubilising agent.

In other embodiments of the invention, the aqueous suspension is treated with the base before treating the aqueous suspension with the selective solubilising agent.

In other embodiments of the invention, the aqueous suspension is treated with the base after treating the aqueous suspension with the selective solubilising agent.

When EDTA is used as the selective solubilising agent, the ratio of mass of EDTA to the mass of the molecular sieve in the aqueous suspension can typically be from 0.2:1 to 1:1, preferably from 0.3:1 to 0.5:1.

The aqueous suspension may in some embodiments of the invention have a solids content of from about 15 wt% to about 45 wt% relative to the total weight of the aqueous suspension.

Typically, the aqueous suspension and the selective solubilising agent, and the base If used, are well mixed.

In some embodiments of the invention, the metal solution is a supernatant of the aqueous suspension after treatment with the selective solubilising agent.

The method may in this regard include forming a supernatant of the aqueous suspension after treatment with the selective solubilising agent. This may include forming a sediment of suspended material in the aqueous suspension after treatment with the selective solubilising agent. Forming such a sediment may for example include centrifuging the aqueous suspension after treatment with the selective solubilising agent.

The aqueous suspension that is treated with the selective solubilising agent may in some embodiments of the invention be a sample from a bulk volume of such an aqueous suspension, i.e., of the insoluble metal compound and the metal ion-exchanged molecular sieve. In such a case, the method may be repeated for two or more samples of such a bulk volume of aqueous suspension.

Quantifying the dissolved metal content of the metal solution using a suitable analytical technique allows for quantification of the amount of the metal in the metal ion-exchanged molecular sieve that was exchanged from the insoluble metal compound.

The suitable analytical technique may include inductively coupled plasma (ICP) spectroscopy, nuclear magnetic resonance (NMR) water relaxometry, ultraviolet-visible (UV-vis) spectroscopy, spectrophotometry, or gravimetric analysis.

In the case of ICP spectroscopy, ICP optical emission spectroscopy or ICP mass spectrometry may be used.

Such quantification can be made by calculating a difference between the dissolved metal content and the amount of the insoluble metal compound before ion-exchange.

The molecular sieve typically has a BET specific surface area of from about 100 to about 1500 $m^2/g$.

The aqueous suspension may further comprise one or more additives selected from one or more of an sugar, a dispersing agent, a surface tension reducer, a rheology modifier, or a combination thereof.

The term "aqueous" as used here does not require 100% water in the sense that it does not exclude the presence of impurities or minor components of other solvents that are miscible with water. Suitable organic solvents include alcohols, nitriles, amides and the like, for example, methanol, ethanol, acetonitrile, dimethylformamide.

According to a second aspect of the invention, there is provided a method of producing a metal ion-exchanged molecular sieve, the method comprising:

forming an aqueous suspension of a molecular sieve and an insoluble metal compound such that the molecular sieve and the insoluble metal compound undergo ion-exchange in the aqueous suspension, thus forming a metal ion-exchanged molecular sieve; and

after expiry of a predetermined time period, or at predetermined time intervals, or at random time intervals, quantifying a dissolved metal content of the aqueous suspension in accordance with the method of the first aspect of the invention.

The metal ion-exchanged molecular sieve may be used to prepare selective catalytic reduction ("SCR") catalysts, ammonia slip catalysts ("ASC") catalysts, or SCR catalytic filter ("SCRF").

**Examples**

*Preparation of a solution containing selective solubilising agent and base*

$Na_4EDTA.2H_2O$ crystals (26 g) were dissolved in deionised water (870 g). Tetraethyl ammonium hydroxide solution (35 wt% aqueous, 104 g) was added and the mixture shaken to homogenise, thus producing a solution containing a selective solubilising agent and a base (hereinafter "selective solubilising agent solution") that was used in the examples that follow.

*Example 1*

A chabazite zeolite ($H^+$ form, 4.0 kg) aqueous slurry was prepared at a solids content of 38%. Alkaline copper carbonate (115 g) was added to the zeolite slurry. The mixture was stirred for 24 h. Samples were taken for analysis at 1, 3, 6, and 24 h after the addition of the basic copper carbonate.

At each sample point about 4 g of the zeolite/copper suspension mixture was removed. To this was added the selective solubilising agent solution (35 g). The resulted mixture was gently agitated for 20 min, then centrifuged at high speed until a clear supernatant layer was formed.

A sample of the supernatant layer (2 g) was removed, and the copper concentration was determined by low field NMR spectroscopy, by reference to a calibration data set of known copper concentration solutions.

The measured [Cu] was corrected to account for the selective solubilising agent solution dilution factor, according to equations 2 and 4, to yield the concentration of free copper (not exchanged into the zeolite framework). The proportion of free Cu in the mixture was calculated according to equation 1. The equations are provided below. Results are shown in Table 1 and Figure 1.

$$Free\ Cu\ (\%) = \frac{[Cu]_{free} \times (100 - CS)}{[Cu]_{bulk}} \qquad \text{Eq. 1}$$

Where:

CS = solids content of the zeolite/copper suspension mixture (%)
$[Cu]_{free}$ = free copper concentration (%m/m)
$[Cu]_{bulk}$ = bulk copper concentration (%m/m) of the zeolite/copper suspension mixture, calculated from quantities of zeolite slurry and alkaline copper carbonate used.

$[Cu]_{free}$ was calculated using equation 2:

$$[Cu]_{free} = [Cu]_{measured} \times DF_{selective\ solubilising\ agent\ solution} \times DF_{acid} \qquad \text{Eq. 2}$$

Where:

$[Cu]_{free}$ = free copper concentration (%m/m)
$[Cu]_{measured}$ = measured copper concentration by ICP or NMR (%m/m)
$DF_{selective\ solubilising\ agent\ solution}$ = selective solubilising agent solution dilution factor
$DF_{acid}$ = acid dilution factor (only applicable to ICP measurement, use $DF_{acid}$ = 1 for NMR measurement)

$DF_{acid}$ and $DF_{selective\ solubilising\ agent\ solution}$ were calculated using equations 3 and 4:

$$DF_{acid} = \frac{(M_{supernatant} + M_{acid})}{M_{supernatant}} \qquad \text{Eq. 3}$$

Where:

$DF_{acid}$ = acid solution dilution factor (ICP preparation)
$M_{supernatant}$ = Mass of supernatant (g)

$M_{acid}$ = Mass of acid solution (g)

$$DF_{selective\ solubilising\ agent\ solution} = \frac{(M_{sample} \times (100 - CS)) + (M_{stock}\text{selective solubilising agent solution} \times 100)}{(M_{sample} \times (100 - CS))} \qquad \text{Eq. 4}$$

Where:

$DF_{selective\ solublising\ agent\ solution}$ = selective solubilising agent solution dilution factor
CS = solids content of the zeolite/copper suspension mixture (%)
$M_{sample}$ = Mass of sample (g)
$M_{selective\ solubilising\ agent\ solution}$ = Mass of selective solubilising agent solution (g)

**Table** 1: Sample copper concentration (Example 1)

| Mixing time (h) | Sample mass (g) | Selective solubilising agent mass (g) | Free [Cu] (%m/m) | Proportion Free Cu (%) |
|---|---|---|---|---|
| 1 | 3.926 | 34.79 | 0.652 | 26 |
| 3 | 3.556 | 32.12 | 0.415 | 16 |
| 6 | 3.871 | 34.91 | 0.291 | 11 |
| 24 | 3.811 | 34.16 | 0.176 | 6 |

*Example 2*

A chabazite zeolite ($H^+$ form, 4.0 kg) aqueous slurry was prepared at a solids content of 37.5%. Alkaline copper carbonate (127 g) was added to the zeolite slurry. The mixture was stirred for 24 h. Samples were taken for analysis at 1, 6, and 24 h after the addition of the basic copper carbonate.

At each sample point about 4 g of the zeolite/copper suspension mixture was removed. To this was added the selective solubilising agent (35 g). The selective solubilising agent / sample mixture was gently agitated for 20 min. Then the selective solubilising agent / sample mixture was centrifuged at high speed until a clear supernatant layer was formed.

About 2 g of the supernatant layer was removed and diluted with about 50 g of a weak acid solution (containing 6% HCl and 2% $HNO_3$) in preparation for ICP analysis. The copper concentration was determined by ICP-OES measurement, by reference to a calibration data set of know copper concentration solutions.

The measured [Cu] was corrected to account for the selective solubilising agent and acid solution dilution factors, according to equations 2 to 4, to yield the concentration of free copper that was not exchanged into the zeolite framework. The proportion of free Cu (not exchanged into the zeolite framework) in the zeolite/copper suspension mixture was calculated according to equation 1. The results are provided in Table 2 and Figure 2.

**Table** 2: Sample copper concentration (Example 2)

| Mixing time (h) | Sample mass (g) | Selective solubilising agent mass (g) | Free [Cu] (%m/m) | Proportion Free Cu (%) |
|---|---|---|---|---|
| 1 | 4.086 | 35.67 | 0.521 | 19 |
| 6 | 4.056 | 36.20 | 0.369 | 10 |
| 24 | 4.083 | 3605 | 0.184 | 6 |

## Claims

1. A method of quantifying a content of an insoluble metal compound in an aqueous suspension comprising an insoluble metal compound and a metal ion-exchanged molecular sieve, the method comprising the steps of:

   treating the aqueous suspension of the insoluble metal compound and the metal ion-exchanged molecular sieve with a selective solubilising agent for the insoluble metal compound, thus producing a treated mixture comprising a metal solution comprising a dissolved metal from the insoluble metal compound and undissolved metal ion-exchanged molecular sieve; and
   quantifying a dissolved metal content of the treated mixture using a suitable analytical technique.

2. The method according to claim 1, wherein the metal ion-exchanged molecular sieve is a reaction product between the insoluble metal compound and a metal-free molecular sieve.

3. The method according to any one of claims 1 to 2, wherein the metal is a transition metal selected from the group consisting of copper, iron, manganese, and mixtures thereof.

4. The method according to any one of claims 1 to 3, wherein the insoluble metal compound is selected from the group consisting of metal carbonates, metal hydroxides, metal oxides, and mixtures thereof,

5. The method according to any one of claims 1 to 4, wherein the insoluble metal compound is alkaline copper carbonate

($CuCO_3.Cu(OH)_2$).

**6.** The method according to any one of claims 1 to 5, wherein the molecular sieve is selected from the group consisting of a zeolitic molecular sieve, a non-zeolitic molecular sieve, and a mixture thereof.

**7.** The method according to any one of claims 1 to 6, wherein the selective solubilising agent is a polycarboxylic acid or an aminopolycarboxylic acid or a salt thereof, more preferably ethylenediaminetetraacetic acid (EDTA) or a salt thereof.

**8.** The method according to any one of claims 1 to 7, wherein the selective solubilising agent is ethylenediaminetetraacetic acid (EDTA) or a salt thereof.

**9.** The method according to any one of claims 1 to 8, wherein treating the aqueous suspension with the selective solubilising agent includes adjusting the pH of the aqueous suspension to greater than 7.

**10.** The method according to claim 9, wherein adjusting the pH of the aqueous suspension includes treating the aqueous suspension with a base selected from the group consisting of sodium hydroxide, potassium hydroxide, calcium hydroxide, tetraethylammonium hydroxide, and mixtures thereof.

**11.** The method according to claim 9, wherein:

the aqueous suspension is treated with the base simultaneously with the treatment of the aqueous suspension with the selective solubilising agent, either in an admixture with the selective solubilising agent or separately of the selective solubilising agent, or

the aqueous suspension is treated with the base before treating the aqueous suspension with the selective solubilising agent, or

the aqueous suspension is treated with the base after treating the aqueous suspension with the selective solubilising agent.

**12.** The method according to any one of claims 1 to 11, wherein suitable analytical techniques include inductively coupled plasma (ICP) spectroscopy, nuclear magnetic resonance (NMR) water relaxometry, ultraviolet-visible (UV-vis) spectroscopy, spectrophotometry, and gravimetry.

**13.** The method according to any one of claims 1 to 12, wherein the metal solution is a supernatant of the aqueous suspension after treatment with the selective solubilising agent.

**14.** A method of producing a metal ion-exchanged molecular sieve, the method comprising:

forming an aqueous suspension of a molecular sieve and an insoluble metal compound such that the molecular sieve and the insoluble metal compound undergo ion-exchange in the aqueous suspension, thus forming a metal ion-exchanged molecular sieve; and,

after expiry of a predetermined time period, or at predetermined time intervals, or at random time intervals, quantifying a dissolved metal content of the aqueous suspension in accordance with the method of claims 1-13.

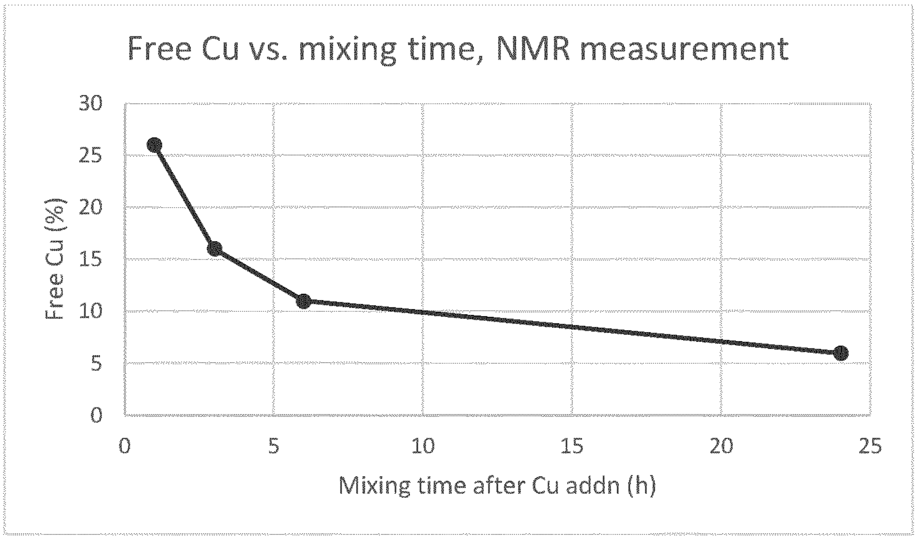
Free Cu vs. mixing time, NMR measurement
30
25
20
15
10
5
0
Free Cu (%)
0
5
10
15
20
25
Mixing time after Cu addn (h)

FIG. 1

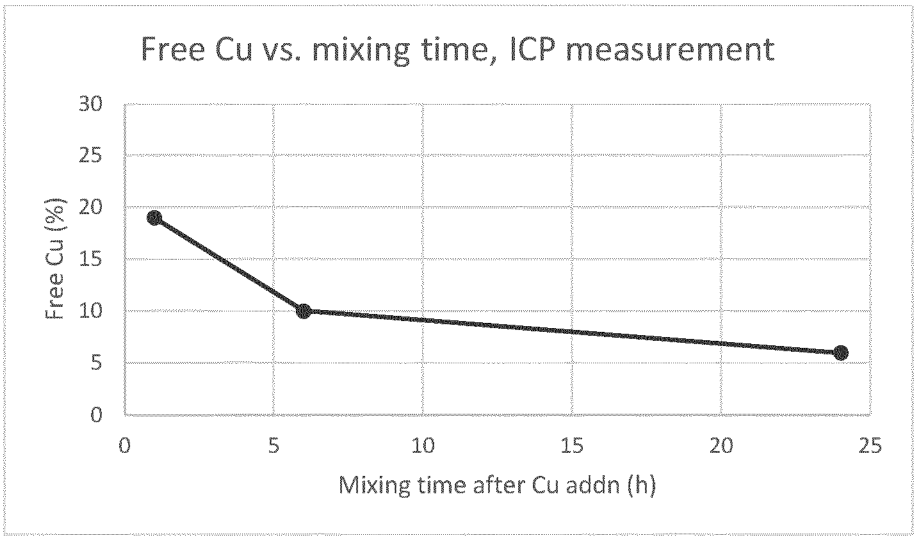
Free Cu vs. mixing time, ICP measurement
30
25
20
15
10
5
0
Free Cu (%)
0
5
10
15
20
25
Mixing time after Cu addn (h)

FIG. 2

Europäisches Patentamt
European Patent Office
Office européen des brevets

# EUROPEAN SEARCH REPORT

Application Number
EP 24 21 2461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2020/227333 A1 (BASF CORP [US]) 12 November 2020 (2020-11-12)<br>* claims; examples *<br>* Preparation of Copper Ion Exchanged Zeolites and Copper Exchange Efficiency *<br>----- | 1-14 | INV.<br>B01J29/76<br>B01J37/30 |
| X | WO 2020/109810 A1 (JOHNSON MATTHEY PLC [GB]) 4 June 2020 (2020-06-04)<br>* claims; examples *<br>* Percentage Uptake;<br>page 16 *<br>----- | 1-14 | |

TECHNICAL FIELDS SEARCHED (IPC)

B01J

The present search report has been drawn up for all claims

1

| Place of search | Date of completion of the search | Examiner |
|---|---|---|
| The Hague | 19 March 2025 | Schoofs, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 21 2461

This annex lists the patent family members relating to the patent documents cited in the above-mentioned European search report. The members are as contained in the European Patent Office EDP file on
The European Patent Office is in no way liable for these particulars which are merely given for the purpose of information.

19-03-2025

| Patent document cited in search report | Publication date | Patent family member(s) | Publication date |
|---|---|---|---|
| WO 2020227333 A1 | 12-11-2020 | CN 113795331 A | 14-12-2021 |
| | | EP 3965929 A1 | 16-03-2022 |
| | | JP 2022532115 A | 13-07-2022 |
| | | KR 20210153644 A | 17-12-2021 |
| | | US 2022258141 A1 | 18-08-2022 |
| | | WO 2020227333 A1 | 12-11-2020 |
| WO 2020109810 A1 | 04-06-2020 | BR 112021005553 A2 | 29-06-2021 |
| | | CN 112771004 A | 07-05-2021 |
| | | EP 3887312 A1 | 06-10-2021 |
| | | GB 2580521 A | 22-07-2020 |
| | | JP 2022513565 A | 09-02-2022 |
| | | JP 2025016478 A | 04-02-2025 |
| | | JP 2025016479 A | 04-02-2025 |
| | | JP 2025016480 A | 04-02-2025 |
| | | KR 20210097098 A | 06-08-2021 |
| | | US 2020171473 A1 | 04-06-2020 |
| | | WO 2020109810 A1 | 04-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020227333 A1